# EUROPEAN PATENT APPLICATION

(11) **EP 3 978 082 A1**
(43) Date of publication of application: **06.04.2022**
(21) Application number: 20813730.7
(22) Date of filing: 11.05.2020
(51) Int. Cl.: A62B 23/02, A62B 18/02, A41D 13/11, A01N 59/20

(54) **REUSABLE ANTIBACTERIAL FINE DUST MASK**

(30) Priority: 27.05.2019 KR 20190061835
(71) Applicant: LSK Finetex Co.,Ltd., Yangju-si, Gyeonggi-do 11413 (KR)
(72) Inventor: KIM, Jang Whan, Goyang-si Gyeonggi-do 10385 (KR)
(74) Representative: Beck & Rössig European Patent Attorneys
(86) International application number: PCT/KR2020/006189
(87) International publication number: WO 2020/242091

(57) **Abstract**

The present invention relates to a fine dust mask, and more particularly, to an antibacterial fine dust mask. The fine dust mask according to the present invention comprises: a mask part; a sealing member fixed to the top of the inner surface of the mask part; and a fine dust filter sheet positioned between the inner surface of the mask part and a user's face.

## Description

### Technical Field

The present invention relates to a fine dust mask, and more particularly, to an antibacterial fine dust mask.

### Background Art

As fine dust becomes increasingly generated, high-performance filter masks capable of filtering the fine dust have been developed and sold. The fine dust masks are configured to allow the fine dust to be filtered by fine pores through which the fine dust is hard to pass and to thus allow the filtered air to pass therethrough.

The fine dust mask has to have a high degree of contact with a wearer's face so as to prevent fine dust from entering a gap between the face and the mask.

So as to enhance the degree of contact with the wearer's face, accordingly, a thin metal pin is attached to an area corresponding to the nasal bridge on the fine dust mask in such a manner as to be deformable according to the face contour, and further, the fine dust mask is pulled and fixed to the head by means of a band with excellent elasticity.

Through the methods, the fine dust filtering efficiency is improved, but difficulties in the wearer's respiration may be made. In specific, in the case of the mask having ultra fine pores adapted to filter ultra fine dust, carbon dioxide produced through the wearer's respiration may not be exhausted from the mask, so that he or she has to breathe again. Due to such problems, some specialists mention that wearing the fine dust mask may be more dangerous than non-wearing.

Further, the fine dust mask may cause environmental problems. Most of pores of the fine dust mask are blocked with the fine dust after the use, and accordingly, the fine dust mask is disposable, not reusable, so that it is thrown out after the use.

On the other hand, the fine dust mask is made of a thin non-woven fabric because of its filtering function, which has lower cold resistance than a general mask made of a fabric, and the fine dust mask comes into contact with the wearer's face by means of straps tightly pulled after worn on his or her face, which undesirably causes marks on the face. Further, the fine dust mask may be bad in aesthetic design, which makes it hard to use it on a day when a mask is needed even though there is no fine dust, for example, on a day when yellow sand or pollen is serious, or on a cold day.

### Disclosure

### Technical Problem

Accordingly, the present invention has been made in view of the above-mentioned problems occurring in the related art, and it is an object of the present invention to provide a new mask that is capable of being reusable, while having a function of filtering fine dust.

It is anther object of the present invention to provide a new mask that is capable of being reusable and excellent in aesthetic design, while having a function of filtering fine dust.

It is still another object of the present invention to provide a new mask that is capable of being usable as a general mask if the concentration of fine dust is low and being usable as a fine dust mask if the concentration of fine dust is high.

It is yet another object of the present invention to provide an antibacterial mask that is capable of being usable as a general mask if the concentration of fine dust is low and being usable as a fine dust mask if the concentration of fine dust is high.

### Technical Solution

To accomplish the above-mentioned objects, according to one aspect of the present invention, there is provided a fine dust mask including a mask part, a sealing member fixed to the top of the inner surface of the mask part, and a fine dust filter sheet positioned between the inner surface of the mask part and a wearer's face.

According to the present invention, the mask may be an elastic band having the mask part adapted to cover the wearer's nose and mouth in such a manner as to allow air to pass therethrough according to the wearer's respiration and loop portions coupled to both sides of the mask part to allow the mask part to be hung on the wearer's ears.

According to the present invention, the mask may be an antibacterial mask adapted to prevent bacteria produced by the water and saliva caused by the wearer's respiration from growing.

According to the present invention, the antibacterial mask may be made of a fabric knitted with an antibacterial fiber, and as the antibacterial knitted fabric is used the antibacterial knitted fabric as disclosed in Korean Patent No. 10-1925070 entitled 'eco-friendly thin film mask pack having excellent wearability, electrical conductivity, and antibacterial properties and method for manufacturing same', in Korean Patent No.10-1925063 entitled 'thin film mask pack having excellent wearability, electrical conductivity, and antibacterial properties and method for manufacturing same', and in Korean Patent No.10-1866418 entitled 'mask sheet having electrical conductivity and antibacterial properties and mask pack using same'.

According to the present invention, the antibacterial mask part may include a knitted fabric that is made by knitting an electrically conductive fiber containing a copper component, preferably combinedly, more preferably stripely, combinedly with one or more fibers selected from the group consisting of a nonconductive fiber containing a copper component, a cotton fiber, a Tencel fiber, a polyester fiber, and a spandex fiber.

According to the present invention, the stripely, combinedly knitted fabric is made by knitting the electrically conductive fiber having the copper component with the nonconductive fiber having the copper component, and as the combinedly knitted fabric is used the knitted fabric as disclosed in Korean Patent No. 10-1925070, Korean Patent No. 10-1925063, and Korean Patent No.10-1866418, which are issued to the same applicant as the invention.

According to the present invention, the antibacterial mask may be a double cloth mask configured to have an outer surface made of a non-antibacterial fabric and an inner surface made of an antibacterial fabric, thereby preventing price increase by the use of a high priced antibacterial fabric needed because of the application of the wearer's saliva generated by his or her respiration to mask portions coming into contact with the wearer's face, and enhancing the stability in shape of the thin film type antibacterial fabric. Desirably, the antibacterial mask may be the double cloth knitted mask made by doubly knitting the non-antibacterial fabric and the antibacterial fabric.

According to the present invention, the mask may be a triple-layered mask having an air layer between a general outer surface and an antibacterial inner surface so as to enhance cold resistant properties. According to the present invention, the triple-layered mask may be a triple-layered knitted mask made by knitting an upper knitted fabric, a lower knitted fabric using an antibacterial fabric, and a vertical knitted fabric.

According to the present invention, the triple-layered knitted mask may include: an upper knitted fabric; a lower knitted fabric including an electrically conductive fiber containing a copper component and a nonconductive fiber containing a copper component; and a vertical knitted fabric including a monofilament fiber.

According to the present invention, desirably, the antibacterial triple-layered knitted mask may be introduced as a reference document and integrated herewith, while being referred through Korean Patent Application Laid-open No. 10-2019-0003694.

According to the present invention, the sealing member may be a member attached to the inside of the mask part to fill a gap generated when the mask part does not completely come into contact with the wearer's face according to his or her face curvature.

According to the present invention, the sealing member may be made of a nonmetal member, preferably a fabric having excellent contact sense, so as to avoid the sense of difference felt from the existing thin metal pin that is inserted into the mask and is fixedly bent to allow the mask to come into contact with the space between the nose and the face and to solve the breakage of the metal pin due to the frequent bending.

According to the present invention, the fabric type sealing member may include a nasal bridge contact portion coming into contact with the wearer's nasal bridge and nasal dorsum contact portions extended symmetrically from both sides of the nasal bridge contact portion in such a manner as to come into contact with the nasal dorsum extended from the nasal bridge under the eyes. According to the present invention, the fabric type sealing member may include a mask contact surface flattedly formed to come into contact with the inner surface of the mask part and a face contact surface having the nasal bridge contact portion thinly formed thereon and the nasal dorsum contact portions thickly formed thereon.

According to the present invention, the fabric type sealing member may be configured to allow a portion thereof to be fixed to the inside of the mask part through a sewn portion, so that a portion of the fine dust filter sheet is preferably insertedly attached to a gap formed between the mask part and the fabric type sealing member.

According to the present invention, the fine dust filter sheet may be a filter sheet capable of filtering fine dust, KF80 filter sheet, more preferably KF85 filter sheet, most preferably KF90 filter sheet. According to the present invention, preferably, the fine dust filter sheet may be any one selected from KF94, KF96, and KF98 filter sheets.

According to the present invention, the fine dust filter sheet may be a three-dimensional filter sheet capable of coming into contact with the inner surface of the mask part, preferably a filter sheet having a three-dimensional shape corresponding to the inner shape of the mask part.

According to the present invention, the fine dust filter sheet is disposable.

Even though not limited theoretically, the fine dust filter sheet may be positioned between the mask part and the wearer's face, so that if he or she inhales, the fine dust filter sheet comes into contact with the face according to the movement of air to thus prevent the suction of the fine dust, and if he or she exhales, the fine dust filter sheet is detached from the face according to the movement of air to thus exhaust the air easily.

According to the present invention, the fine dust filter sheet may be repeatedly attached and detached to and from the wearer's face by means of his or her respiration, and so as to prevent the fine dust filter sheet from moving down, without being fixed, during the repetition of the attachment and detachment, a portion of the fine dust filter sheet is insertedly fixed to a gap between the sealing member and the mask part, thereby ensuring easy separation and exchange after used.

To accomplish the above-mentioned objects, according to another aspect of the present invention, there is provided a fine dust mask including a mask part and a fine dust filter sheet configured to allow a portion thereof to be fixed to the inner surface of the mask part and to allow a portion not fixed to the mask part to move according to a wearer's respiration.

To accomplish the above-mentioned objects, according to still another aspect of the present invention, there is provided a mask including a nonmetal sealing member fixed to top of the inner surface thereof.

In the description, the term 'knitted' is defined as knitted through a circular knitting machine, and the term 'knitted fabric' is defined as a fabric that is knitted in such a manner as to be expanded by at least 10%, preferably 20%, more preferably 30% and then returned to its original state.

In the description, the term 'electrical conductivity' is defined as the conductivity of the fiber to which electricity flows.

In the description, the term 'antibacterial' is defined as reducing growing of one or more bacteria preferably by 50% or more, more preferably by 90% or more.

In the description, the term 'electrically conductive fiber containing a copper component' is defined as a fiber containing a copper component, while having conductivity.

In the description, the term 'nonconductive fiber containing a copper component' is defined as an antibacterial fiber having no electrical conductivity, irrespective of the electrically conductive fiber having the copper component.

In the description, the term 'inner surface' is defined as the surface coming into contact with the wearer's face when the mask is worn on his or her face.

### Advantageous Effects

According to the present invention, the new mask can be used as both of a fine dust mask and a general mask according to necessities.

In addition, the fine dust mask according to the present invention can be configured to have the sealing member adapted to prevent the fine dust from entering the gap between the wearer's nasal bridge and the face and to have the fine dust filter sheet moving in the interior thereof according to the wearer's respiration, so that if the wearer inhales, the fine dust filter sheet comes into contact with the nose and mouth, thereby effectively keeping the fine dust from being sucked. Further, if the wearer exhales, the fine dust filter sheet comes into contact with the inner surface of the mask part, thereby easily exhausting carbon dioxide.

Moreover, the fine dust mask according to the present invention can be configured to allow the fine dust filter sheet to be separated and exchanged with new one, thereby more enhancing resource saving when compared to the existing fine dust mask that is totally thrown out after single use.

### Brief Description of Drawings

FIG. 1 is a perspective view showing the outer surface of a fine dust mask according to the present invention.
FIG.2 is a front view showing the inner surface of the fine dust mask according to the present invention.
FIG.3 is an exploded perspective view showing the fine dust mask according to the present invention.
FIG.4 is a sectional view showing the fine dust mask according to the present invention.
FIG. 5 is a sectional view showing the operating state of the fine dust mask according to the present invention.

### Best Mode for Invention

Hereinafter, an explanation of the present invention will be in detail given with reference to the attached drawings. The present invention may be embodied in different forms and should not be construed as limited to the embodiment set forth herein but may be modified and variously implemented by those skilled in the art.

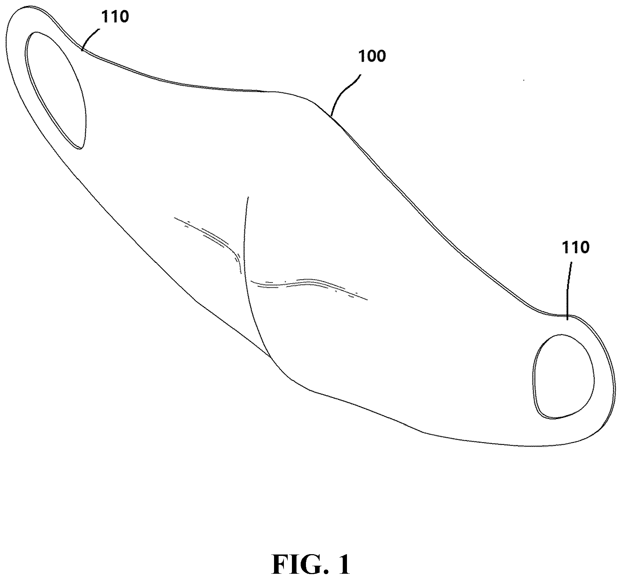

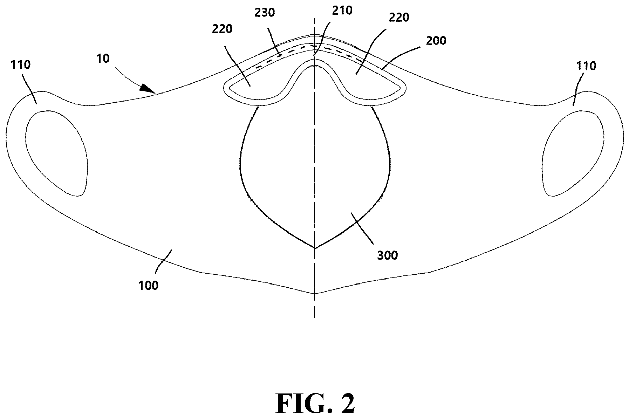

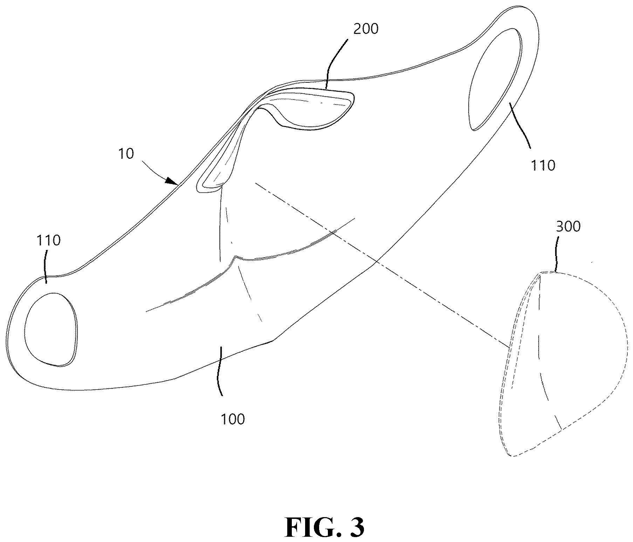

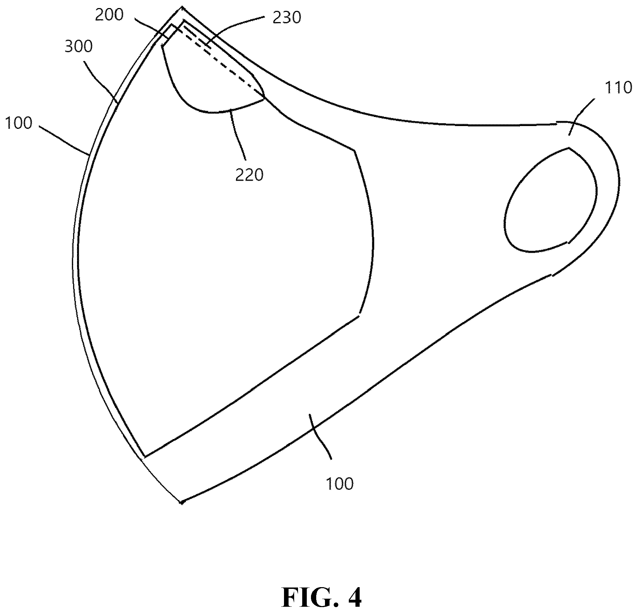

As shown in FIGS.1 to 4, a fine dust mask 10 according to the present invention 1 includes a mask part 100, a sealing member 200 fixed to the top of the inner surface of the mask part 100; and a fine dust filter sheet 300 positioned between the inner surface of the mask part 100 and a wearer's face.

The mask part 100 protrudes from a center portion thereof according to the face contour, is shaped symmetrically with respect to left and right sides, and has loop portions 110 formed on both sides thereof to hang the fine dust mask 10 on the ears.

The mask part 100 is knitted three layeredly, together with the loop portions 110, by means of a double circular knitting machine.

So as to manufacture an upper knitted fabric corresponding to the outer surface of the mask part 100, polyester, nylon and spandex feeders are supplied, and so as to manufacture a lower knitted fabric corresponding to the inner surface of the mask part 100, conductive fiber containing a copper component, non-conductive fiber containing a copper component, nylon 66, and spandex feeders are supplied. So as to manufacture a vertical knitted fabric, polyester monofilament fiber and copper component-contained non-conductive fiber feeders are supplied. The double circular knitting machine operates under the conditions of a loop length in the range of 4 to 20 cm, a feeder in the range of 80 to 150, and a gauge in the range of 18 to 30, and the upper knitted fabric is spaced apart from the lower knitted fabric by about 2 mm.

The conductive fiber containing the copper component is made according to known methods (Korean Patent Nos. 10-1866418 and 10-1925070). So as to make the conductive fiber containing the copper component, first, about 70 denier of a nylon fiber is loaded in a reaction vessel and is then adjusted to a bath ratio of 1:15 to 20, and 3 to 5g/L of a de-oiling agent is treated at a temperature of 60°C for 40 minutes to wash the floating substances produced by the de-oiling agent with water. Next, 2 to 3% o.w.f. of levulinic acid, 0.1 to 0.5% o.w.f. of sodium lauryl sulfate, 0.1 to 0.3% o.w.f. of polyethylene glycol, 8 to 10% o.w.f. of sodium thiosulfate, 0.2% o.w.f. of EDTA, and 10 to 20% o.w.f. of copper sulfate are added to the reaction vessel and are then agitated for about 10 minutes. After that, the mixture is raised to a temperature of 60°C by 1°C/mm in the range of 4 to 5 pH and is then reacted at 60°C for 60 minutes. Next, 0.3% o.w.f. of sodium hypophosphate is added to the mixture, and reduction precipitation is performed at 60°C for 20 minutes. Unreacted substances are removed to pH 7, and 0.3% o.w.f. of magnesium hydroxide is added at pH7. Next, the mixture is treated at 40°C for 20 minutes to remove residual sulfur.

The non-conductive fiber containing the copper component is made of a fiber produced by KOLON GLOTECH INC., the polyester fiber has 50 denier, and the spandex is a thin fiber having 30 denier.

In the feeders provided for the upper knitted fabric, the pre-dyed polyester has 75 denier, the nylon 50 denier, and the spandex 20 denier, and in the feeders provided for the lower knitted fabric, the conductive fiber containing the copper component has 70 denier, the non-conductive fiber containing the copper component 70 denier, the nylon 70 denier, and the spandex 20 denier. In the feeders provided for the vertical knitted fabric, further, the polyester monofilament fiber has 40 denier and the non-conductive fiber containing the copper component has 70 denier.

The upper knitted fabric contains 15% by weight of the polyester, 10% by weight of the nylon, and 5% by weight of the spandex, the lower knitted fabric contains 5% by weight of the conductive fiber containing the copper component, 15% by weight of the non-conductive fiber containing the copper component, 20% by weight of the nylon, and 5% by weight of the spandex, and the vertical knitted fabric contains 20% by weight of the polyester monofilament fiber and 5% by weight of the non-conductive fiber containing the copper component.

The sealing member 200 fixed to the top of the inner surface of the mask part 100 is a member made of a fabric attached to the inside of the mask so as to fill a gap generated when the mask does not completely come into contact with the wearer's face due to the face curvature.

The sealing member 200 has a nasal bridge contact portion 210 coming into contact with the wearer's nasal bridge and nasal dorsum contact portions 220 extended symmetrically from both sides of the nasal bridge contact portion 210 in such a manner as to come into contact with the nasal dorsum extended from the nasal bridge under the eyes. The surface of the sealing member 200 coming into contact with the mask part 100 is flat so that it can be brought into contact with the inner surface of the mask part 100, and the surface of the sealing member 200 coming into contact with the wearer's face is curved.

The nasal bridge contact portion 210 is thinly formed, and the nasal dorsum contact portions 220 are thickly formed and protrude, so that when the mask is worn on the face by hanging the loop portions 110 on the wearer's ears, accordingly, the nasal dorsum contact portions 220 compressedly come into contact with the nasal dorsum, thereby filling the gap isolated from the mask.

The sealing member 200 is configured to allow a top end center portion thereof to be fixed to the inside of the mask through a sewn portion 230, while the other portion is not being fixed to the mask, so that the sealing member 200 produces a gap in which the fine dust filter sheet 300 is fixedly inserted between the inner surface of the mask part 100 and the sealing member 200.

The fine dust filter sheet 300 is made of a KF94 sheet that is capable of filtering fine dust particles less than 10 micrometers or ultra fine dust particles less than 2.5 micrometers. The fine dust filter sheet 300 has a three-dimensional shape that is symmetrical with respect to left and right sides thereof, while having a center portion protruding therefrom according to the face contour, so as to come into contact with the inner surface of the mask part 100. The fine dust filter sheet 300 is fixed to the mask, without any loops hung on the eyes or any separate device for bonding or attachment to the inner surface of the mask part 100.

As the mask part 100 and the sealing member 200 are compressed against the wearer's face when the mask is worn on his or her face, the fine dust filter sheet 300 whose top center portion is fixedly fitted between the inner surface of the mask part 100 and the sealing member 200 becomes compressed and fixed, without moving down.

The fine dust filter sheet 300 can be exchangeably used. The exchange is carried out by taking the mask 10 off, lifting up the sealing member 200 whose top is fixed to the inner surface of the mask part 100, removing the fine dust filter sheet 300, insertedly fitting a new fine dust filter sheet 300 to the gap between the inner surface of the mask part 100 and the sealing member 200, moving the sealing member 200 down, and wearing the mask 10 on the wearer's face again.

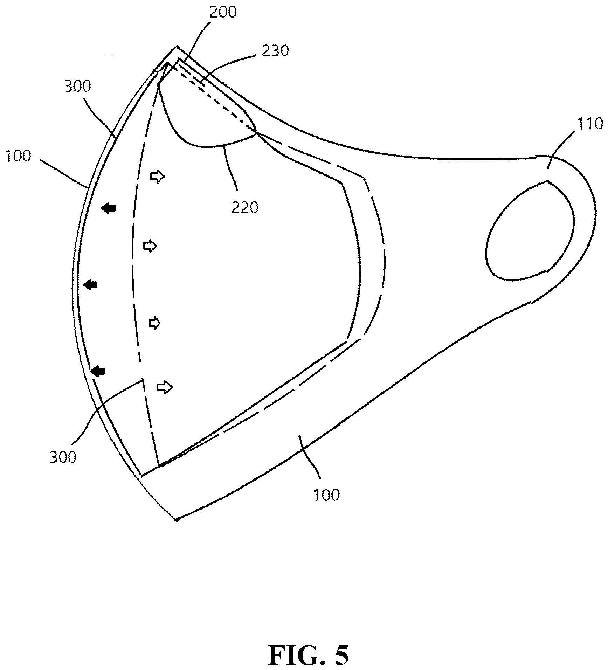

As shown in FIG.5, the fine dust filter sheet 300 whose top center portion is fixedly fitted to the gap between the inner surface of the mask part 100 and the sealing member 200 is configured to allow the lower end portion not fixed to move between the wearer's face and the inside of the mask part 100 according to the wearer's respiration.

When the wearer inhales air, the fine dust filter sheet 300 comes close to the wearer's face according to the inhaled air to thus prevent fine dust from entering the gap between the inner surface of the mask part 100 and the sealing member 200, and contrarily, when the wearer exhales air, the fine dust filter sheet 300 comes close to the inner surface of the mask part 100 according to the exhaled air to thus allow the carbon dioxide contained in the exhaled air to be easily exhausted through the gap.

## Claims

1. A fine dust mask comprising:
a mask part;
a sealing member fixed to the top of the inner surface of the mask part; and
a fine dust filter sheet positioned between the inner surface of the mask part and a wearer's face.

2. The fine dust mask according to claim 1, wherein the sealing member is a nonmetal member.

3. The fine dust mask according to claim 1 or 2, wherein the sealing member is a fabric type sealing member.

4. The fine dust mask according to claim 3, wherein the fabric type sealing member comprises a nasal bridge contact portion coming into contact with the wearer's nasal bridge and nasal dorsum contact portions extended symmetrically from both sides of the nasal bridge contact portion in such a manner as to come into contact with the nasal dorsum extended from the nasal bridge under the eyes.

5. The fine dust mask according to claim 4, wherein the nasal bridge contact portion is thinly formed and the nasal dorsum contact portions are thickly formed.

6. The fine dust mask according to claim 3, wherein the fabric type sealing member is configured to allow the top thereof to be fixed to the inside of the mask through a sewn portion, while the bottom thereof is being not fixed.

7. The fine dust mask according to claim 1, wherein the fine dust filter sheet has a three-dimensional shape corresponding to the inner shape of the mask.

8. The fine dust mask according to claim 7, wherein the fine dust filter sheet is disposable.

9. The fine dust mask according to claim 1, wherein the fine dust filter sheet is partially fixed to the inner surface of the mask part and/or the sealing member.

10. The fine dust mask according to claim 9, wherein the fine dust filter sheet is configured to allow a portion of top thereof to be insertedly attached to a gap between the inner surface of the mask part and the sealing member.

11. The fine dust mask according to claim 1, wherein the mask part is an antibacterial mask part.

12. The fine dust mask according to claim 11, wherein the inner surface of the antibacterial mask part is made of an antibacterial fabric.

13. The fine dust mask according to claim 11 or 12, wherein the antibacterial mask part comprises a knitted fabric that is made by knitting an electrically conductive fiber containing a copper component combinedly with one or more fibers selected from the group consisting of a nonconductive fiber containing a copper component, a cotton fiber, a Tencel fiber, a polyester fiber, and a spandex fiber.

14. The fine dust mask according to claim 11 or 12, wherein the antibacterial mask part is a three-layered knitted mask part having a non-antibacterial upper knitted fabric, a lower knitted fabric using an antibacterial fabric, and a vertical knitted fabric.

15. The fine dust mask according to claim 14, wherein the three-layered knitted mask part comprises: an upper knitted fabric; a lower knitted fabric having an electrically conductive fiber containing a copper component and a nonconductive fiber containing a copper component; and a vertical knitted fabric containing a monofilament fiber.

16. A fine dust mask comprising:
a mask part; and
a fine dust filter sheet configured to allow a portion thereof to be fixed to the inner surface of the mask part and to allow a portion not fixed to the inner surface of the mask part to move according to a wearer's respiration.

17. A mask comprising a nonmetal sealing member fixed to top of the inner surface thereof so as to seal a gap between a wearer's nasal bridge and face.

18. The mask according to claim 17, wherein the nonmetal sealing member is a fabric type sealing member comprising a nasal bridge contact portion coming into contact with the wearer's nasal bridge and nasal dorsum contact portions extended symmetrically from both sides of the nasal bridge contact portion in such a manner as to come into contact with the nasal dorsum extended from the nasal bridge under the eyes.

19. The mask according to claim 18, wherein the fabric type sealing member comprises the nasal bridge contact portion thinly formed thereon and the nasal dorsum contact portions thickly formed thereon.

20. The mask according to claim 19, which is a three layered knitted mask having a non-antibacterial upper knitted fabric, a lower knitted fabric using an antibacterial fabric, and a vertical knitted fabric.
